# EUROPÄISCHE PATENTSCHRIFT

(11) **EP 3 877 482 B1**
(45) Veröffentlichungstag und Bekanntmachung des Hinweises auf die Patenterteilung: **10.01.2024**
(21) Anmeldenummer: 19795178.3
(22) Anmeldetag: 25.10.2019
(51) Int. Cl.: C09K 5/10, C09K 5/20

(54) **VERWENDUNG VON WÄRMETRÄGERFLÜSSIGKEITEN ZUR KÜHLUNG VON LITHIUM-AKKUMULATOREN**
USE OF HEAT TRANSFER FLUIDS FOR COOLING LITHIUM BATTERIES
UTILISATION DE FLUIDES CALOPORTEURS POUR LE REFROIDISSEMENT D'ACCUMULATEURS AU LITHIUM

(30) Priorität: 06.11.2018 EP 18204600; 12.02.2019 EP 19156713; 12.02.2019 EP 19156712
(43) Veröffentlichungstag der Anmeldung: 15.09.2021
(73) Patentinhaber: BASF SE, 67056 Ludwigshafen am Rhein (DE)
(72) Erfinder: DIETL, Harald, 67056 Ludwigshafen (DE); SIEG, Roger, 67056 Ludwigshafen (DE)
(74) Vertreter: BASF IP Association
(86) Internationale Anmeldenummer: PCT/EP2019/079237
(87) Internationale Veröffentlichungsnummer: WO 2020/094428

(56) Entgegenhaltungen:
- WO-A1-03/074626
- WO-A1-2018/095759
- REZA YOUNESI ET AL: "Lithium salts for advanced lithium batteries: Li-metal, Li-O 2 , and Li-S", ENERGY & ENVIRONMENTAL SCIENCE, Bd. 8, Nr. 7, 1. Juni 2015 (2015-06-01), Seiten 1905-1922, XP055655378, Cambridge ISSN: 1754-5692, DOI: 10.1039/C5EE01215E
- Anonymous: "Lithium-ion battery - Wikipedia", , 1. November 2018 (2018-11-01), XP055655375, Gefunden im Internet: URL:https://en.wikipedia.org/w/index.php?t itle=Lithium-ion_battery&oldid=866702078 [gefunden am 2020-01-07]

## Beschreibung

Die vorliegende Erfindung betrifft neue, im wesentlichen wasserfreie Gefrierschutz- und Kühlmittel zur Kühlung von Lithium-Akkumulatoren, bevorzugt in Kraftfahrzeugen, besonders bevorzugt in Personen- und Nutzfahrzeugen (sogenannte light und heavy duty Fahrzeuge).

Lithium-Akkumulatoren für den mobilen Einsatz, besonders in Kraftfahrzeugen, müssen auch bei niedrigen Außentemperaturen von bis zu etwa minus 40°C betrieben werden können. Ein frostgeschützter Kühlmittelkreislauf ist deshalb unerlässlich.

Ferner werden bei einer Schnellladung von Batterien Temperaturen bis über 100 °C erreicht, so daß die Wärme abgeführt werden muß, um das jeweilige Bauteil nicht zu schädigen.

Für Lithium-Akkumulatoren sind generell sowohl besonders niedrige als auch besonders hohe Temperaturen unvorteilhaft:
Bestimmte Akkumulatoren, beispielsweise solche, die Kobaltoxide, Lithium-Kobalt(III)-Oxid, Nickeldioxid oder Mischoxide, wie Lithium-Nickel-Mangan-Kobalt-Oxide, enthalten, zeigen bei hohen Temperaturen von ca. 180 °C ein thermisches Durchgehverhalten, bei dem die eingesetzten Oxide zersetzt werden und Sauerstoff freisetzen, der innerhalb der Zelle zu exothermen Reaktionen führen, beispielsweise mit Wasserstoff reagieren kann, was zu Bränden oder einer Zerstörung der Zelle führen kann.

Ferner neigt das Elektrolytmaterial bei hohen Temperaturen zur Zersetzung.

Daher wird herstellerseitig oftmals empfohlen, die Betriebstemperatur von Lithium-Akkumulatoren im Entladevorgang auf +60 °C zu begrenzen.

Umgekehrt wird bei niedrigen Temperaturen die Einsatzfähigkeit der Akkumulatoren durch verschiedene Effekte eingeschränkt, beispielsweise Einfrieren oder Ausfallen des Elektrolyten, Anstieg der Viskosität des Elektrolytmaterials, verringerte Ionenwanderung oder erhöhter Innenwiderstand der Zelle.

Hersteller empfehlen daher oftmals für den Einsatz der Akkumulatoren im Entladebetrieb einen Temperaturbereich von etwa 0 bis +40 °C, optimal 18 bis 25 °C.

Ebenso kann Laden bei besonders niedrigen Temperaturen zu einer starken Alterung und irreversibler Schädigung des Elektrodenmaterials führen, so daß üblicherweise 0 °C als untere Temperaturgrenze für den Ladevorgang empfohlen wird.

Eine Aufgabe eines Kühlmittels besteht also darin, die Akkumulatoren sowohl beim Laden als auch bei der Entladung in einem Temperaturbereich zu halten, in dem sie optimal funktionsfähig sind und Beschädigungen ausgeschlossen werden können.

Dies ermöglicht ein effizienteres Temperaturmanagement der so gekühlten Akkumulatoren.

Die Verwendung von bei Verbrennungsmotoren eingesetzten herkömmlichen wäßrigen Kühlerschutzmitteln auf Basis von Wasser, Monoalkylenglykolen optional in Kombination mit Glycerin wäre bei Akkumulatoren, Brennstoffzellen und/oder Batterien ohne eine vollständige elektrische Isolierung der Kühlkanäle nicht möglich, da diese Mittel wegen der darin als Korrosionsinhibitoren enthaltenen Salze und ionisierbaren Verbindungen eine zu hohe elektrische Leitfähigkeit haben, was die Funktion der Brennstoffzelle oder Batterie negativ beeinträchtigen würde. Ferner droht beispielsweise im Falle eines Unfalls mit Auslaufen der Elektrolytflüssigkeit bei Kontakt der Batteriepole mit der Kühlflüssigkeit ein Kurzschluß und/oder die Entwicklung von Wasserstoffgas durch Elektrolyse, was zusätzliches Gefährdungspotential mit sich bringt.

Die als Elektrolyten eingesetzten Salze reagieren jedoch mit Wasser unter Hydrolyse. So ist beispielsweise aus A. V. Plakhotnyk et al., Journal of Fluorine Chemistry, 126 (2005) 27 - 31 bekannt, daß von LiPF₆ gelöst in aprotischen organischen Lösungsmitteln bereits bei einem Wassergehalt von 0,5 Gew% über etwa 23 Tage in Summe ca. 10 mol% des eingesetzten LiPF₆ hydrolysiert. So ändert die Hydrolyse des Elektrolyten LiPF₆ die Zusammensetzung des Elektrolyten und verändert so die Funktionsfähigkeit des Akkumulators undefiniert. Ferner entsteht bei der Hydrolyse giftige Fluorwasserstoffsäure.

Es besteht also Bedarf an Kühlmitteln, bei deren Kontakt mit der Elektrolytflüssigkeit keine wesentliche Reaktion stattfindet.

WO 95/07323 offenbart wasserfreie Kühlmittel mit einem Wassergehalt unter 0,5 Gew% auf Basis Propylenglykol und optional Ethylengykol, jedoch lediglich für Verbrennungsmotoren. Eine Verwendung zur Kühlung elektrischer Baukomponenten wird nicht nahegelegt.

Ferner ist es erforderlich, daß die Kühlmittel über einen langen Zeitraum ihre anfänglich meist niedrige elektrische Leitfähigkeit beibehalten und nicht durch verschiedene Zersetzungsprozesse, meist unter Bildung von Ionen, in ihrer Leitfähigkeit ansteigen.

Im Stand der Technik werden verbreitet wasserfreie Kühlmittelkonzentrate beschrieben, z.B. in US 8394287, bei denen eine Kühlerschutzkomponente, meist Monoethylenglykol, mit verschiedenen Additiven, beispielsweise Korrosionsinhibitoren, Antioxidantien, Anti-Schaummittel, Bitterstoffe und Farbstoffe, gemischt werden. US 8394287 beschreibt zusätzlich noch die Anwesenheit von mindestens einer weiteren Kühlerschutzkomponente, beispielsweise Monopropylenglykol, höhere Ethylenglykolhomologe oder Glycerin, zu dem Konzentrat. Andere Konzentrate und deren wässrige Zusammensetzung als Kühlmittel für Brennstoffzellen sind ebenfalls bekannt (siehe WO 03/074626 A1 und WO 2018/095759 A1).

Zweck dieser Kühlmittelkonzentrate ist immer die spätere Verdünnung mit Wasser für die Verwendung als Kühlmittel (meist mit einem Wassergehalt von 30 bis 70 Vol%), der Einsatz der unverdünnten Konzentrate als Kühlmittel ist nicht vorgesehen.

Beschrieben werden oftmals auch sogenannte Superkonzentrate, bei denen es sich im wesentlichen um hochkonzentrierte Formulierungen der obigen Additive in relativ wenig Kühlerschutzkomponente, meist Monoethylenglykol oder auch Monopropylenglykol, handelt.

Zweck dieser Superkonzentrate ist immer die spätere Verdünnung mit einer Kühlerschutzkomponente zur Herstellung des Kühlmittelkonzentrats und daraus dann die Herstellung des eigentlichen Kühlmittels. Der Einsatz der unverdünnten Superkonzentrate als Kühlmittel ist nicht vorgesehen.

Der Einsatz als Kühlmittel für Akkumulatoren wird in den obigen Dokumenten weder beschrieben noch nahegelegt.

Aufgabe der vorliegenden Erfindung war es also, Kühlmittel zu entwickeln, mit denen eine zellnahe Kühlung von Lithium-Akkumulatoren möglich ist, ohne daß das Kühlmittel bei Kontakt wesentlich mit der eingesetzten Elektrolytflüssigkeit reagiert, das eine geringe elektrische Leitfähigkeit aufweist, das bei niedrigen Temperatur einsetzbar bleibt, also nicht fest wird oder einen starken Viskositätsanstieg zeigt, und das auch bei hohen Temperaturen zur Wärmeabfuhr befähigt ist.

Ferner sollte das Kühlmittel darüberhinaus eine geringe Leitfähigkeit aufweisen und diese auch im Betrieb beibehalten, was besonders eine geringe Korrosion erfordert, da eine Korrosion einen loneneintrag in das Kühlmittel bedeutet, was die elektrische Leitfähigkeit erhöhen würde.

Die Aufgabe wurde gelöst durch die Verwendung von Wärmeträgerflüssigkeiten, enthaltend
(A) mindestens ein Alkylenglykolderivat der Formel (I) 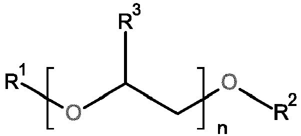 worin
   - R¹: Wasserstoff oder C₁- bis C₄-Alkyl, bevorzugt Wasserstoff, Methyl oder Ethyl, besonders bevorzugt Wasserstoff oder Methyl und ganz besonders bevorzugt Wasserstoff,
   - R²: C₁- bis C₄-Alkyl, bevorzugt Methyl, Ethyl oder n-Butyl, besonders bevorzugt Methyl oder n-Butyl und ganz besonders bevorzugt Methyl
   - R³: Wasserstoff oder Methyl, bevorzugt Wasserstoff und
   - n: im arithmetischen Mittel eine Zahl von 3,0 bis 4,0
   bedeuten,
   und
(B) mindestens einen Korrosionsinhibitor, ausgewählt aus der Gruppe bestehend aus
   (Ba) ortho-Kieselsäureestern und/oder Alkoxyalkylsilanen
   (Bb) Azolderivaten
   (Bc) Verbindungen der allgemeinen Formel (II) 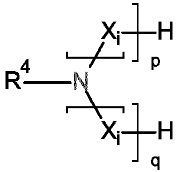 worin
      - R⁴: einen organischen Rest mit 6 bis 10 Kohlenstoffatomen, insbesondere einen geradkettigen oder verzweigten, bevorzugt geradkettigen Alkyl- oder Alkenylrest mit 6 bis 10 Kohlenstoffatomen, bevorzugt 7 bis 9 und besonders bevorzugt 8 Kohlenstoffatomen,
      p und q unabhängig voneinander eine positive ganze Zahl von 1 bis 30, bevorzugt 1 bis 20, besonders bevorzugt 1 bis 10, ganz besonders bevorzugt 1 bis 5 und insbesondere 1 bis 3, speziell 1 oder 2 und
      jedes Xᵢ für i = 1 bis p und 1 bis q unabhängig voneinander ausgewählt aus der Gruppe bestehend aus -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CH(C₂H₅)-O-, -CH(C₂H₅)-CH₂-O-, -CH(CH₃)-CH(CH₃)-O-, -CH₂-CH₂-CH₂-O- und -CH₂-CH₂-CH₂-CH₂-O-, bevorzugt ausgewählt aus der Gruppe bestehend aus -CH₂-CH₂-O-, -CH₂-CH(CH₃)-O- und -CH(CH₃)-CH₂-O-, besonders bevorzugt handelt es sich um -CH₂-CH₂-O-,
      bedeuten,
   zur Kühlung von Lithiumionen-Akkumulatoren, die als Elektrolyten (E) mindestens eine Verbindung ausgewählt aus der Gruppe bestehend aus Lithiumhexafluorophosphat (LiPF₆), Lithiumtetrafluorborat (LiBF₄), Lithiumperchlorat (LiClO₄), Lithiumphosphat (Li₃PO₄) und Lithium-bis(oxalato)borat (LiBOB) enthalten,
   mit der Maßgabe, daß die Wärmeträgerflüssigkeit
      - weniger als 1 Gew% Wasser enthält, bevorzugt weniger als 0,75, besonders bevorzugt weniger als 0,5, ganz besonders bevorzugt weniger als 0,4, insbesondere weniger als 0,3 und speziell weniger als 0,2 Gew%.

Es stellt einen Vorteil der erfindungsgemäßen Zusammensetzungen dar, daß die eingesetzten Komponenten (A) nicht wesentlich mit den in den Lithiumionen-Akkumulatoren eingesetzten Elektrolyten (E) reagieren, sollten diese, beispielsweise durch eine mechanische Beschädigung der Zelle, in Kontakt miteinander geraten.

Die einzelnen Komponenten seien im folgenden näher beschrieben:

### Komponente (A)

In dem mindestens einen Alkylenglykolderivat der Formel (I) 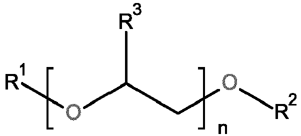 bedeuten
- R¹: Wasserstoff oder C₁- bis C₄-Alkyl, bevorzugt Wasserstoff, Methyl oder Ethyl, besonders bevorzugt Wasserstoff oder Methyl und ganz besonders bevorzugt Wasserstoff,
- R²: C₁- bis C₄-Alkyl, bevorzugt Methyl, Ethyl oder n-Butyl, besonders bevorzugt Methyl oder n-Butyl und ganz besonders bevorzugt Methyl
- R³: Wasserstoff oder Methyl, bevorzugt Wasserstoff und
- n: im arithmetischen Mittel eine Zahl von 3,0 bis 4,0.

Bevorzugte Alkylenglykolderivate (A) sind
Triethylenglykol monomethylether
Triethylenglykol monoethylether
Triethylenglykol mono-n-butylether
Triethylenglykol dimethylether
Triethylenglykol diethylether
Triethylenglykol di-n-butylether
Tetraethylenglykol monomethylether
Tetraethylenglykol monoethylether
Tetraethylenglykol mono-n-butylether
Tetraethylenglykol dimethylether
Tetraethylenglykol diethylether
Tetraethylenglykol di-n-butylether
Tripropylenglykol monomethylether
Tripropylenglykol monoethylether
Tripropylenglykol mono-n-butylether
Tripropylenglykol dimethylether
Tripropylenglykol diethylether
Tripropylenglykol di-n-butylether
Tetrapropylenglykol monomethylether
Tetrapropylenglykol monoethylether
Tetrapropylenglykol mono-n-butylether
Tetrapropylenglykol dimethylether
Tetrapropylenglykol diethylether
Tetrapropylenglykol di-n-butylether

Dabei sind die Ethylenglykolether gegenüber den Propylenglykolethern bevorzugt.

Ferner sind die Monoalkylether gegenüber den Dialkylethern bevorzugt.

Bevorzugt handelt es sich bei der Komponente (A) um im wesentlichen reine Verbindung der Formel (I) mit n = 3 oder um eine Mischung von Verbindungen der Formel (I) mit n = 3 und n = 4. Im arithmetischen Mittel beträgt n für die Verbindungen der Formel (I) im Gemisch bevorzugt von 3,0 bis 3,6, besonders bevorzugt von 3,0 bis 3,5, ganz besonders bevorzugt von 3,05 bis 3,4, insbesondere von 3,1 bis 3,3 und speziell von 3,15 bis 3,25.

Dabei können die Reste R¹ und R² für die Verbindungen im Gemisch gleich oder verschieden sein, bevorzugt sind sie gleich.

Mit "im wesentlichen rein" ist dabei bezeichnet, daß Verbindungen der Formel (I) mit n = 3 bzw. n = 4 zu einem bestimmten Anteil auch die homologen Verbindungen mit höheren und niedrigeren Werten für n enthalten sind.

In der Regel beträgt der Reinheitsgrad bei Verbindungen der Formel (I) mit n = 3 mindestens 80 Gew%, bevorzugt mindestens 85 Gew%, ganz besonders bevorzugt mindestens 90 Gew%, insbesondere mindestens 95 Gew% und speziell mindestens 97,5 Gew%. Der Rest sind überwiegend Verbindungen der Formel (I) mit n = 2 und n = 4.

Bei Verbindungen der Formel (I) mit n = 4 ist hingegen der Reinheitsgrad zumeist nur über 50 Gew%, bevorzugt mindestens 55, besonders bevorzugt mindestens 60 Gew%. Der Rest sind überwiegend Verbindungen der Formel (I) mit n = 3 und in geringerem Ausmaß n = 5.

Bevorzugte Komponenten (A) mit im wesentlichen reinen Verbindungen sind
Triethylenglykol monomethylether
Triethylenglykol monoethylether
Triethylenglykol mono-n-butylether
Bevorzugte Komponenten (A) mit Mischungen von Verbindungen der Formel (I) mit n = 3 und n = 4 sind
Triethylenglykol monomethylether im Gemisch mit Tetraethylenglykol monomethylether
Triethylenglykol monoethylether im Gemisch mit Tetraethylenglykol monoethylether
Triethylenglykol mono-n-butylether im Gemisch mit Tetraethylenglykol mono-n-butylether

Denkbar, wenn auch weniger bevorzugt, sind solche Mischungen von Verbindungen der Formel (I) mit n = 3 und n = 4, die unterschiedliche Reste R¹ aufweisen.

Derartige Mischungen sind
Triethylenglykol monomethylether im Gemisch mit Tetraethylenglykol monoethylether
Triethylenglykol monomethylether im Gemisch mit Tetraethylenglykol mono-n-butylether
Triethylenglykol monoethylether im Gemisch mit Tetraethylenglykol monomethylether
Triethylenglykol monoethylether im Gemisch mit Tetraethylenglykol mono-n-butylether
Triethylenglykol mono-n-butylether im Gemisch mit Tetraethylenglykol monomethylether
Triethylenglykol mono-n-butylether im Gemisch mit Tetraethylenglykol monoethylether

Denkbar, wenn auch weniger bevorzugt, sind gemischte Alkylenglykolderivate der Formel (I), bei denen R³ für jedes n unabhängig voneinander gleich oder verschieden sein kann, d.h. also Tri- und Tetraalkylenglykolderivate der Formel (I) aus Mischungen von Ethylenoxid und Propylenoxid.

Bei Gemischen von Verbindungen der Formel (I) mit n = 3 und n = 4 beträgt das Verhältnis bevorzugt von 100 : 0 bis 40 : 60, besonders bevorzugt 95 : 5 bis 50 : 50, ganz besonders bevorzugt 90 : 10 bis 60 : 40, insbesondere von 85 : 15 bis 70 : 30 und speziell 85 : 15 bis 75 : 25.

### Komponente (B)

Bei der Komponente (B) handelt es sich um mindestens einen Korrosionsinhibitor ausgewählt aus der Gruppe bestehend aus aus der Gruppe bestehend aus
(Ba) ortho-Kieselsäureestern und/oder Alkoxyalkylsilanen
(Bb) Azolderivaten und
(Bc) Verbindungen der allgemeinen Formel (II)

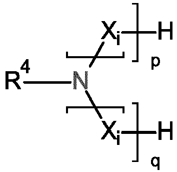

Bei den ortho-Kieselsäureestern (Ba) handelt es sich um Verbindungen der Formel Si(OR⁵)₄ worin
- R⁵: jeweils einen organischen Rest mit 1 bis 6 Kohlenstoffatomen, bevorzugt einen geradkettigen oder verzweigten, bevorzugt geradkettigen Alkylrest mit 1 bis 6 Kohlenstoffatomen oder einen Arylrest mit 6 Kohlenstoffatomen, besonders bevorzugt einen Alkylrest mit 1 bis 4 Kohlenstoffatomen, ganz besonders bevorzugt einen Alkylrest mit 1 oder 2 Kohlenstoffatomen bedeuten.

Beispiele dafür sind
ortho-Kieselsäure tetramethylester
ortho-Kieselsäure tetraethylester
ortho-Kieselsäure tetra-n-butylester
ortho-Kieselsäure tetraphenylester
Bevorzugt sind
ortho-Kieselsäure tetramethylester
ortho-Kieselsäure tetraethylester
Besonders bevorzugt ist
ortho-Kieselsäure tetraethylester.

Bei den gegenüber den ortho-Kieselsäureestern weniger bevorzugten Alkoxyalkylsilanen handelt es sich bevorzugt um Triethoxymethylsilan, Diethoxydimethylsilan, Ethoxytrimethylsilan, Trimethoxymethylsilan, Dimethoxydimethylsilan und Methoxytrimethylsilan.

Unter Azolderivaten (Bb) werden im Rahmen dieser Schrift fünfgliedrige heterocyclische Verbindungen mit 2 oder 3 Heteroatomen aus der Gruppe Stickstoff und Schwefel, welche kein oder maximal ein Schwefelatom in den Ring eingebaut enthalten und welche optional einen aromatischen oder gesättigten sechsgliedrigen Anellanten tragen können.

Diese fünfgliedrigen heterocyclischen Verbindungen (Azolderivate) enthalten als Heteroatome üblicherweise zwei N-Atome und kein S-Atom, 3 N-Atome und kein S-Atom oder ein N-Atom und ein S-Atom.

Bevorzugte Gruppen der genannten Azolderivate sind anellierte Imidazole und anellierte 1,2,3-Triazole der allgemeinen Formel 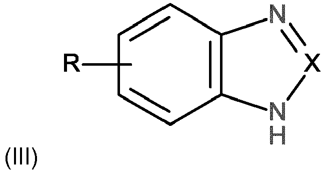 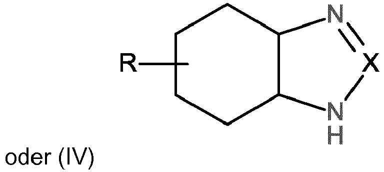 in denen die Variable
R Wasserstoff oder einen C₁- bis C₁₀-Alkylrest, insbesondere Methyl oder Ethyl, bedeutet und die Variable X ein Stickstoffatom oder die Gruppierung C-H bezeichnet.

Typische und bevorzugte Beispiele für Azolderivate der allgemeinen Formel (III) sind Benzimidazol (X = C-H, R = H), Benzotriazol (X = N, R = H) und Tolutriazol (Tolyltriazol) (X = N, R = CH₃). Ein typisches Beispiel für ein Azolderivat der allgemeinen Formel (IV) ist hydriertes 1,2,3-Tolutriazol (Tolyltriazol) (X = N, R = CH₃).

Eine weitere bevorzugte Gruppe der genannten Azolderivate sind Benzthiazole der allgemeinen Formel (V) 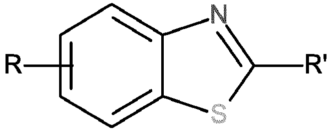 in der
die Variable R die oben genannte Bedeutung hat und
die Variable R' Wasserstoff, einen C₁- bis C₁₀-Alkylrest, insbesondere Methyl oder Ethyl, oder insbesondere eine Mercaptogruppe (-SH) bezeichnet. Denkbar, wenn auch weniger bevorzugt kann R' auch ein Carboxyalkylrest der Formel -(CₘH₂ₘ)-COOR" sein, wobei m für eine Zahl von 1 bis 4 steht und R" C₁- bis C₁₀-Alkyl, insbesondere Methyl oder Ethyl, oder C₆- bis C₁₂-Aryl bedeutet. Beispiele dafür sind (2-Benzothiazylthio)-essigsäure ester oder 3-(2-Benzothiazylthio)-propionsäure ester. Ein typisches Beispiel für ein Azolderivat der allgemeinen Formel (V) ist 2-Mercaptobenzthiazol.

Weiterhin werden nicht-anellierte Azolderivate der allgemeinen Formel (VI) 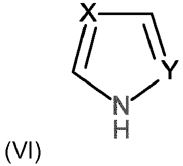 in der die Variablen
X und Y zusammen zwei Stickstoffatome oder
ein Stickstoffatom und eine Gruppierung C-H bezeichnen,
beispielsweise 1H-1,2,4-Triazol (X = Y = N) oder bevorzugt Imidazol (X = N, Y = C-H).

Ganz besonders bevorzugt werden für die vorliegende Erfindung als Azolderivate Benzimidazol, Benzotriazol, Tolutriazol, hydriertes Tolutriazol oder Mischungen hieraus, insbesondere Benzotriazol oder Tolutriazol, speziell Tolutriazol.

Die genannten Azolderivate sind kommerziell verfügbar oder nach gängigen Methoden herstellbar. Hydrierte Benzotriazole wie hydriertes Tolutriazol sind ebenfalls gemäß DE-A 1 948 794 zugänglich und auch kommerziell verfügbar.

In der allgemeinen Formel (II) der Komponente (Bc) sind
- R⁴: einen organischen Rest mit 6 bis 10 Kohlenstoffatomen, insbesondere einen geradkettigen oder verzweigten, bevorzugt geradkettigen Alkyl- oder Alkenylrest mit 6 bis 10 Kohlenstoffatomen, bevorzugt 7 bis 9 und besonders bevorzugt 8 Kohlenstoffatomen, p und q unabhängig voneinander eine positive ganze Zahl von 1 bis 30, bevorzugt 1 bis 20, besonders bevorzugt 1 bis 10, ganz besonders bevorzugt 1 bis 5, insbesondere 1 bis 3, speziell 1 oder 2 und jedes Xᵢ für i = 1 bis p und 1 bis q unabhängig voneinander ausgewählt aus der Gruppe bestehend aus -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CH(C₂H₅)-O-, -CH(C₂H₅)-CH₂-O-, -CH(CH₃)-CH(CH₃)-O-, -CH₂-CH₂-CH₂-O- und -CH₂-CH₂-CH₂-CH₂-O-, bevorzugt ausgewählt aus der Gruppe bestehend aus -CH₂-CH₂-O-, -CH₂-CH(CH₃)-O- und -CH(CH₃)-CH₂-O-, besonders bevorzugt handelt es sich um -CH₂-CH₂-O-.

In den Verbindungen der Formel (II) ist das Strukturelement R⁴-N< bevorzugt abgeleitet von Fettaminen, die bevorzugt durch Hydrierung und Aminierung von Fettsäuren und Estern erhältlich sind, besonders bevorzugt durch Hydrierung und Aminierung der oben genannten Fettsäuren oder Aminierung von Fettalkoholen.

Als Reste R⁴sind Alkylreste den Alkenylresten gegenüber bevorzugt.

In einer speziellen Ausführungsform sind p und q unabhängig voneinander 1, 2 oder 3, besonders bevorzugt 1 oder 2 und ganz besonders bevorzugt 1.

In einer bevorzugten Ausführungsform handelt es sich bei den Fettaminen um n-Hexylamin, 2-Methylpentylamin, n-Heptylamin, 2-Heptylamin, iso-Heptylamin, 1-Methylhexylamin, n-Octylamin, 2-Ethylhexylamin, 2-Aminooctan, 6-Methyl-2-heptylamin, n-Nonylamin, iso-Nonylamin, n-Decylamin und 2-Propylheptylamin oder deren Gemische.

Besonders bevorzugt sind n-Hexylamin, n-Octylamin, 2-Ethylhexylamin und n-Decylamin, ganz besonders bevorzugt sind n-Octylamin und 2-Ethylhexylamin und insbesondere n-Octylamin.

Insbesondere zu nennen ist zweifach, dreifach, vierfach, fünffach und sechsfach ethoxyliertes n-Octylamin, sowie Mischungen daraus, und zweifach, dreifach, vierfach, fünffach und sechsfach ethoxyliertes n-Hexylamin, sowie Mischungen daraus.

Bei den alkoxylierten Aminen der allgemeinen Formel (II) bezieht sich der Alkoxylierungsgrad auf die Summe (p + q), also auf die durchschnittliche Gesamtzahl der Alkoxylierungseinheiten pro Molekül Amin.

Die Verbindungen (II) sind bevorzugt erhältlich, indem man die korrespondierenden Amine R⁴-NH₂ mit Alkylenoxiden bis zu dem gewünschten mittleren statistischen Alkoxylierungsgrad umsetzt, bevorzugt unter basischen Bedingungen. Dies ist dann besonders bevorzugt, wenn die Struktureinheit Xᵢ abgeleitet ist von Ethylenoxid oder Propylenoxid, bevorzugt von Ethylenoxid.

Die erfindungsgemäßen Zusammensetzungen enthalten in der Regel
Komponente (A): 95 bis 99,9 Gew%, bevorzugt 96 bis 99,8, besonders bevorzugt 97 bis 99,5, ganz besonders bevorzugt 97,5 bis 99 Gew% und insbesondere 98 bis 99 Gew%.
Komponente (B): 0,1 bis 5 Gew%, bevorzugt 0,2 bis 4, besonders bevorzugt 0,5 bis 3, ganz besonders bevorzugt 1 bis 2,5 Gew% und speziell 1 bis 2 Gew%.

### Komponente (C) - weitere optionale Korrosionsinhibitoren

Neben mindestens einer der obigen Komponenten (B) als obligatorischem Korrosionsinhibitor kann die erfindungsgemäße Zusammensetzung optional noch mindestens einen weiteren Korrosionsinhibitor enthalten, der ein anderer als die unter (B) aufgeführten ist.

Es stellt jedoch eine bevorzugte Ausführungsform der vorliegenden Erfindung dar, daß außer den oben genannten Komponenten (B) keine weiteren Korrosionsinhibitoren (C) in der Zusammensetzung enthalten sind.

Beispiele für die Komponenten (C) sind aliphatische, cycloaliphatische oder aromatische Amine mit 2 bis 15 Kohlenstoffatomen, die zusätzlich Ethersauerstoffatome oder Hydroxylgruppen enthalten können und die verschieden von den Verbindungen (Bc) der Formel (II) sind.

Die Amine (C) weisen vorzugsweise 2 bis 9, insbesondere 4 bis 8 Kohlenstoffatome auf. Die Amine (C) sind vorzugsweise tertiäre Amine. Die Amine (C) enthalten vorzugsweise 0 bis 3 Ethersauerstoffatome oder 0 bis 3, bevorzugt 0 bis 2 Hydroxylgruppen. Typische Beispiele für die Amine (C) sind Ethylamin, Propylamin, iso-Propylamin, n-Butylamin, iso-Butylamin, sec.-Butylamin, tert.-Butylamin, n-Pentylamin, n-Hexylamin, n-Heptylamin, n-Octylamin, 2-Ethylhexylamin, n-Nonylamin, iso-Nonylamin, Di-n-propylamin, Diiso-propylamin, Di-n-butylamin, Mono-, Di- und Triethanolamin, Mono-, Di- und Triisopropanolamin, Piperidin, Morpholin, Cyclohexylamin, Anilin und Benzylamin. Aliphatische und cycloaliphatische Amine (C) sind in der Regel gesättigt.

Weiterhin ist der Einsatz von Fettsäurealkoxylaten und Fettalkoholalkoxylaten als weitere Korrosionsinhibitor denkbar, wie Sie beschrieben sind in der WO 18/95759 als Verbindungen der Formel (V) und (VI) von Seite 5, Zeile 34 bis Seite 10, Zeile 10 beschrieben sind, worauf hiermit Bezug genommen sei.

Die Komponente (C) ist optional und kann in den erfindungsgemäßen Zusammensetzungen in Mengen von 0 bis 2 Gew%, bevorzugt 0 bis 1,5 Gew%, besonders bevorzugt 0 bis 1 Gew%, ganz besonders bevorzugt 0 bis 0,7 Gew% anwesend sein.

In einer ausdrücklich bevorzugten Ausführungsform ist keine Komponente (C) anwesend.

### Komponente (D) - weitere Additive

Die erfindungsgemäße Zusammensetzung kann optional noch mindestens ein weiteres Additiv enthalten, ausgewählt aus der Gruppe bestehend aus
(Db) Farbstoffen
(Dc) Entschäumer
(Dd) Antioxidantien und
(De) Emulgatoren.

Bei diesen Stoffen handelt es sich um handels- und anwendungsübliche Verbindungen aus dem Stand der Technik, die typischerweise in Kühlmitteln eingesetzt werden können.

Eine Funktion der eingesetzten Emulgatoren (De) in den erfindungsgemäßen Zusammensetzungen ist, daß sie aus dem Kühlsystem stammende potentielle Verunreinigungen und/oder Montageflüssigkeiten (assembly fluids), z.B. Polyalkylenglykole oder Oligomere des Glycerin, in den Zusammensetzungen emulgieren können.

Die Komponenten (D) sind jeweils optional und können in den erfindungsgemäßen Zusammensetzungen jeweils unabhängig voneinander in Mengen von 0 bis 0,5 Gew%, bevorzugt 0,001 bis 0,3 Gew% und besonders bevorzugt 0,002 bis 0,2 Gew% anwesend sein.

### Komponente (E) - Elektrolytflüssigkeitn

Die Aufgabe des Elektrolyten besteht darin, die Bewegung der Lithium-Kationen zwischen Kathode und Anode während Lade- oder Entladeprozeß für den Ladungsausgleich zu gewährleisten, so daß hierfür Lithiumsalze (Ea) infrage kommen.

Die in den erfindungsgemäß zu kühlenden Lithiumionen-Akkumulatoren eingesetzten Elektrolyten sind ausgewählt aus der Gruppe bestehend aus Lithiumhexafluorophosphat (LiPF₆), Lithiumtetrafluorborat (LiBF₄), Lithiumperchlorat (LiClO₄), Lithiumphosphat (Li₃PO₄) und Lithium-bis(oxalato)borat (LiBOB), bevorzugt ausgewählt aus der Gruppe bestehend aus Lithiumhexafluorophosphat (LiPF₆), Lithiumtetrafluorborat (LiBF₄) und Lithiumperchlorat (LiClO₄), besonders bevorzugt ausgewählt aus der Gruppe bestehend aus Lithiumhexafluorophosphat (LiPF₆) und Lithiumtetrafluorborat (LiBF₄) und ganz besonders bevorzugt handelt es sich um Lithiumhexafluorophosphat (LiPF₆).

Diese Elektrolytsalze sind üblicherweise in aprotischen organischen Lösungsmitteln (Eb) gelöst, um das Elektrolytsalz (Ea) flüssig zu halten und somit die Beweglichkeit der Lithiumionen im Akkumulator zu gewährleisten.

Der Gehalt von Komponente (Ea) in der Elektrolytflüssigkeit, also Summe aus (Ea) und (Eb), kann beispielsweise 5 bis 50 Gew%, bevorzugt 10 bis 40 und besonders bevorzugt 15 bis 30 Gew% betragen.

Beispiele für aprotische Lösungsmittel (Eb) sind offenkettige oder cyclische Carbonate, Ether, beispielsweise cyclische oder offenkettige Ether, wie Alkylenglykol dialkylether, oder Acetonitril, bevorzugt sind offenkettige oder cyclische Carbonate.

Offenkettige Carbonate sind bevorzugt Dialkyl carbonate, bevorzugt Di-C₁-C₄-alkyl carbonate, besonders bevorzugt Dimethylcarbonat, Ethylmethylcarbonat, Diethylcarbonat oder Di-n-butylcarbonat.

Cyclische Carbonate sind bevorzugt Ethylencarbonat und Propylencarbonat.

Cyclische Ether sind beispielsweise Tetrahydrofuran, Alkylenglykol dialkylether sind bevorzugt Ethylenglykol dialkylether, besonders bevorzugt Ethylenglykol di-C₁-C₄-alkylether, ganz besonders bevorzugt Ethylenglykol dimethylether, Ethylenglykol diethylether und Ethylenglykol di-n-butylether, insbesondere Ethylenglykol dimethylether.

In einer Ausführungsform können als Lösungsmittel (Eb) für den Elektrolyten die Carbonate der Komponente (A) allein oder bevorzugt in Kombination mit den anderen oben genannten aprotischen Lösungsmitteln eingesetzt werden. Denkbar ist auch der Einsatz dieser Carbonate in der Wärmeträgerflüssigkeit.

Bei diesen Carbonaten handelt es sich um aprotische Verbindungen der Formel (VII) 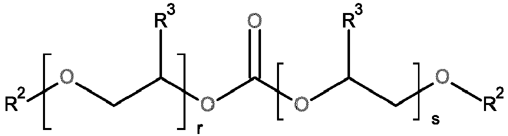 worin
R² und R³ die oben bei Komponente (A) beschriebene Bedeutung haben und
r und s im arithmetischen Mittel Zahlen von 3,0 bis 4,0
bedeuten,
wobei unabhängig voneinander R² und R³ für jedes r und s gleich oder verschieden sein können, bevorzugt gleich sind.

Beispielsweise handelt es sich bei den Verbindungen der Formel (VII) um die
Carbonate von Triethylenglykol monomethylether
Carbonate von Triethylenglykol monoethylether
Carbonate von Triethylenglykol mono-n-butylether
Carbonate von Tetraethylenglykol monomethylether
Carbonate von Tetraethylenglykol monoethylether
Carbonate von Tetraethylenglykol mono-n-butylether
gemischte Carbonate von Triethylenglykol monomethylether und Tetraethylenglykol monomethylether
gemischte Carbonate von Triethylenglykol monoethylether und Tetraethylenglykol monoethylether
gemischte Carbonate von Triethylenglykol mono-n-butylether und Tetraethylenglykol mono-n-butylether
Carbonate von Tripropylenglykol monomethylether
Carbonate von Tripropylenglykol monoethylether
Carbonate von Tripropylenglykol mono-n-butylether
Carbonate von Tetrapropylenglykol monomethylether
Carbonate von Tetrapropylenglykol monoethylether
Carbonate von Tetrapropylenglykol mono-n-butylether
gemischte Carbonate von Tripropylenglykol monomethylether und Tetrapropylenglykol monomethylether
gemischte Carbonate von Tripropylenglykol monoethylether und Tetrapropylenglykol monoethylether
gemischte Carbonate von Tripropylenglykol mono-n-butylether und Tetrapropylenglykol mono-n-butylether.

Unter diesen sind die Carbonate der Ethylenglykol ether bevorzugt vor denen der Propylenglykol ether.

In der Regel liegen die Carbonate als Gemische der jeweiligen Homologen vor, bevorzugt sind folgende Gemische:
Gemisch aus Carbonat von Triethylenglykol monomethylether, Carbonat von Tetraethylenglykol monomethylether und gemischtem Carbonat von Triethylenglykol monomethylether und Tetraethylenglykol monomethylether,
Gemisch aus Carbonat von Triethylenglykol monoethylether, Carbonat von Tetraethylenglykol monoethylether und gemischtem Carbonat von Triethylenglykol monoethylether und Tetraethylenglykol monoethylether, sowie
Gemisch aus Carbonat von Triethylenglykol mono-n-butylether, Carbonat von Tetraethylenglykol mono-n-butylether und gemischtem Carbonat von Triethylenglykol mono-n-butylether und Tetraethylenglykol mono-n-butylether.

In einer bevorzugten Ausführungsform sind die Reste R² und R³ in der eingesetzten Komponente (A) und dem Carbonat (Eb) die gleichen.

### Eigenschaften der erfindungsgemäßen Zusammensetzungen

Die erfindungsgemäßen Zusammensetzungen unterliegen folgenden Maßgaben:
Sie enthalten weniger als 1 Gew% Wasser, bevorzugt weniger als 0,75, besonders bevorzugt weniger als 0,5, ganz besonders bevorzugt weniger als 0,4, insbesondere weniger als 0,3 und speziell weniger als 0,2 Gew%. Es kann von Vorteil sein einen Wassergehalt unter 0,15 Gew%, bevorzugt unter 0,1 Gew% und sogar unter 0,05 Gew% einzustellen.

Der erfindungsgemäß geringe Wassergehalt bewirkt auch langfristig eine lediglich geringe Hydrolyse des eingesetzten Elektrolyts (Ea), sollte es zu einem Kontakt zwischen Wärmeträgerflüssigkeit und Elektrolytsalz (Ea) kommen.

Ferner kann bei einer Verwendung der Zusammensetzung als Kühlmittel für Kühlsysteme in Brennstoffzellen, Akkumulatoren und/oder Batterien Wasser bei einer signifikanten elektrischen Leitfähigkeit zu einer Elektrolyse der Zusammensetzung und unerwünschten Wasserstoffentwicklung führen, die ein erhöhtes Unfallrisiko birgt.

Es kann ferner einen Vorteil bieten, wenn die erfindungsgemäßen Zusammensetzungen einen Anteil an Alkylenglykolderivaten der Formel (I) mit n s 2 von nicht mehr als 10 Gew% enthalten, bevorzugt nicht mehr als 8, besonders bevorzugt nicht mehr als 6, ganz besonders bevorzugt nicht mehr als 5, insbesondere nicht mehr als 4 und speziell nicht mehr als 3 Gew%.

Ein höherer Gehalt an Alkylenglykolderivaten der Formel (I) mit n s 2 würde einerseits ebenfalls den Siedepunkt ungewünscht absenken und andererseits die Viskosität der Zusammensetzung zu stark verringern. Eine zu geringe Viskosität kann in bestimmten Anwendungen unerwünscht sein, da niedrigviskose Flüssigkeiten Dichtungen leicht überwinden und somit Leckagen verursachen.

Es kann ferner einen Vorteil bieten, wenn die erfindungsgemäßen Zusammensetzungen einen Anteil an Alkylenglykolderivaten der Formel (I) mit n ≥ 5 von nicht mehr als 5 Gew% enthalten, bevorzugt nicht mehr als 4, besonders bevorzugt nicht mehr als 3, ganz besonders bevorzugt nicht mehr als 2,5 und speziell nicht mehr als 2 Gew%.

Hier gilt umgekehrt, daß höhere Homologe eine hohe Viskosität der Zusammensetzung bewirken und somit die Pumpbarkeit der Zusammensetzung erschweren. Eine hohe Viskosität erfordert eine erhöhte Pumpleistung und somit einen erhöhten Energieverbrauch der Pumpen. Weiterhin haben die höheren Homologe zusätzlich einen erhöhten Schmelzpunkt, so daß bei niedrigen Temperaturen die Gefahr besteht, daß diese aus der Zusammensetzung ausfallen.

Es kann ferner einen Vorteil bieten, wenn die erfindungsgemäßen Zusammensetzungen einen Anteil an Monoethylenglykol, Diethylenglykol, Monopropylenglykol, Dipropylenglykol, 1,3-Propylenglykol und Glycerin von jeweils nicht mehr als 20 Gew% enthalten, bevorzugt nicht mehr als 15, besonders bevorzugt nicht mehr als 10, ganz besonders bevorzugt nicht mehr als 8 und speziell nicht mehr als 5 Gew%.

Die erfindungsgemäßen Zusammensetzungen weisen bevorzugt eine spezifische Wärmekapazität bei 50 °C von mindestens 2,0 kJ/kg×K auf, besonders bevorzugt von mindestens 2,1, ganz besonders bevorzugt mindestens 2,2 und insbesondere von mindestens 2,3 kJ/kg×K.

Die erfindungsgemäßen Zusammensetzungen weisen bevorzugt eine Wärmeleitfähigkeit von mindestens 0,15 W/m×K auf.

Weiterhin werden als Komponenten (A) bevorzugt Verbindungen mit einer Polarisierbarkeit von nicht mehr als 50 C × m²/V eingesetzt, besonders bevorzugt nicht mehr als 45, ganz besonders bevorzugt nicht mehr als 40, insbesondere nicht mehr als 35 und speziell nicht mehr als 30.

### Verwendung

Es stellt einen Vorteil der beschriebenen Zusammensetzungen dar, daß sie als Wärmeträgerflüssigkeiten zur Kühlung, bevorzugt zur zellnahen Kühlung von Lithiumionen-Akkumulatoren einsetzbar sind. Damit ist es möglich, Akkumulatoren sowohl gegen niedrige als auch gegen hohe Temperaturen in einem optimalen Temperaturbereich zu thermostatieren und Einschränkung von deren Betriebsfähigkeit zu beseitigen.

Die erfindungsgemäßen Kühlmittel eignen sich dabei besonders zur zellnahen Kühlung von Lithiumionen-Akkumulatoren, worunter im Rahmen dieser Schrift verstanden wird, daß eine Akkumulatorzelle über einen Teil der Wandung der Zelle in wärmeleitendem Kontakt mit dem Wärmetauscher steht, der das Kühlmittel enthält. Es ist sogar denkbar, daß die Wandung der Zelle unmittelbar vom Kühlmittel umströmt wird und somit in direktem Kontakt mit dem Kühlmittel steht.

Auch wenn in dieser Schrift überwiegend die traditionelle Bezeichnung "Kühlmittel" verwendet wird, sei damit nicht nur eine Abfuhr von Wärme gemeint, sondern auch eine Wärmezufuhr bei niedrigen Temperaturen des Akkumulatoren. Soweit es die vorliegende Erfindung betrifft sei im Rahmen dieser Schrift "Kühlmittel" gleichbedeutend mit Wärmeträgerflüssigkeit verwendet und "Kühlung" gleichbedeutend mit "Temperierung".

Die erfindungsgemäßen Wärmeträgerflüssigkeiten eignen sich besonders zur Temperierung von solchen Lithiumionen-Akkumulatoren, die kein metallisches Lithium einsetzen, besonders bevorzugt Lithium-Kobaltdioxid-Akkumulatoren, Lithiumtitanat-Akkumulatoren, Lithium-Mangan-Akkumulatoren, Lithium-Nickel-Kobalt-Aluminium-Akkumulatoren, Lithium-Eisenphosphat-Akkumulatoren, die jeweils auch als Lithium-Polymer-Akkumulatoren ausgestaltet sein können. Besonders bevorzugt ist die Anwendung in Lithium-Kobaltdioxid-Akkumulatoren, Lithium-Mangan-Akkumulatoren und Lithium-Nickel-Kobalt-Aluminium-Akkumulatoren, ganz besonders bevorzugt in Lithium-Mangan-Akkumulatoren und Lithium-Nickel-Kobalt-Aluminium-Akkumulatoren.

Dem allgemeinen Sprachgebrauch folgend werden die Begriffe "Batterie" und "Akkumulator" hier so verwendet, daß Akkumulatoren wiederaufladbare, einzelne oder zusammengeschaltete Speicher für chemische Energie beschreiben und "Batterie" als Oberbegriff für wiederaufladbare und nicht wiederaufladbare Speicher verwendet wird. Der Begriff "Akkumulator" stellt somit also eine Untermenge von "Batterie" dar.

Es stellt einen weiteren Vorteil der erfindungsgemäßen Zusammensetzungen dar, daß sie mit den wichtigsten üblicherweise eingesetzten Dichtungsmaterialien verträglich sind. Dies gilt beispielsweise für EPDM (Ethylen-Propylen-Dien-(Monomer)-Kautschuke, bevorzugt nach EN 13956), SBR (Styrol-Butadien-Kautschuke), FKM (Fluorkarbon-Kautschuke, bevorzugt nach DIN ISO 1629 oder ASTM D 1418, wie z.B. Viton^{®}), NBR (Acrylnitril Butadien Kautschuke) und HNBR (hydrierte Acrylnitril Butadien Kautschuke).

Es stellt einen weiteren Vorteil der erfindungsgemäßen Zusammensetzungen dar, daß sie mit den wichtigsten üblicherweise eingesetzten Wandungsmaterialien für Batteriezellen verträglich sind. Dies gilt beispielsweise für Polyethylen (PE), Polypropylen (PP), Polystyrol (PS) AcrylnitrilButadien-Styrol-Copolymere (ABS), Polycarbonate (PC) und Polymethylmethacrylat (PMMA).

Es stellt einen Vorteil der erfindungsgemäßen Zusammensetzungen dar, daß sie stabil gegen thermische Belastung und Oxidation sind und ihre anfänglich niedrige elektrische Leitfähigkeit auch längerfristig beibehalten, da die Bildung von elektrisch leitfähigen Produkten infolge Zersetzung oder Oxidation verringert ist.

Die erfindungsgemäßen Zusammensetzungen weisen bevorzugt einen Siedepunkt bei 1013 hPa (Normaldruck) von mindestens 200 °C, bevorzugt mindestens 210, besonders bevorzugt mindestens 220, ganz besonders bevorzugt mindestens 230 und insbesondere mindestens 250 °C auf.

Dies bewirkt, daß die Zusammensetzungen auch bei hohen Umgebungstemperaturen noch flüssig sind und als Wärmeträger fungieren können, ohne daß der Dampfdruck über den Zusammensetzungen zu stark erhöht wird. Somit können die erfindungsgemäßen Zusammensetzungen auch bei hohen Temperaturen in offenen Systemen gehandhabt werden.

Wie oben ausgeführt besitzen die erfindungsgemäßen Zusammensetzungen eine vorteilhafte Viskosität auf, die nicht zu niedrig und nicht zu hoch ist.

Bevorzugt weisen sie eine kinematische Viskosität bei 100 °C gemäß ASTM D445 von höchstens 4 mm²/s auf, besonders bevorzugt von höchstens 3 und ganz besonders bevorzugt von höchstens 2 mm²/s auf.

Weiterhin zeigen sie bevorzugt eine kinematische Viskosität bei minus 40 °C gemäß ASTM D445 von nicht mehr als 600 mm²/s, besonders bevorzugt von nicht mehr als 500, ganz besonders bevorzugt von nicht mehr als 400 und insbesondere nicht mehr als 350 mm²/s.

Es stellt einen Vorteil der erfindungsgemäßen Zusammensetzungen dar, daß sie über einen weiten Temperaturbereich, bevorzugt von minus 40 °C bis plus 100 °C, einerseits eine niedrigere Viskosität und andererseits eine geringere Änderung der Viskosität zeigen also konventionelle Kühlmittel auf Basis von Wasser und Monoethylenglykol:
So wird ein Gemisch von 50 Gew% Wasser und 50 Gew% Monoethylenglykol bereits bei etwa minus 37 °C fest, ist also nicht in dem oben genannten bevorzugten Temperaturbereich einsetzbar. Die kinematische Viskosität eines solchen Gemisches beträgt bei minus 20 °C etwa 300 mm²/s.

Es stellt einen Vorteil der vorliegenden Erfindung dar, daß typische Mischungen gemäß der vorliegenden Erfindung bei minus 40 °C nicht fest sind und eine kinematische Viskosität bei minus 40 °C von etwa 250 bis 500 mm²/s sowie bei minus 20 °C von nicht mehr als etwa 100 mm²/s aufweisen.

Die Veränderung der kinematischen Viskosität im Temperaturbereich von minus 40 °C bis plus 100 °C beträgt also bei den erfindungsgemäßen Zusammensetzungen nicht mehr als etwa 500 mm²/s und schwankt somit geringer als die obige Mischung aus Wasser und Monoethylenglykol. Dies hat zur Folge, daß im Kühlsystem Pumpen mit einer geringeren Förderleistung eingesetzt werden können, so daß weniger Energie für die Förderung des Kühlmittels im Kühlsystem aufgewandt werden muß.

Angaben zu Prozent, ppm oder Teilen in dieser Schrift beziehen sich auf Gew%, Gew.ppm oder Gewichtsteile, sofern nicht anders angegeben.

### Beispiele

Um die Reaktivität der Komponenten (A) mit dem Elektrolyten (E) online und nichtinvasiv festzustellen wurden von den Komponenten einzeln bzw. in Mischung in einem Bruker AV3-500p NMR Spektrometer bei 298 K gegen einen externen DMSO-Standard 500 MHz ¹H-, 470 MHz ¹⁹F- und 202 MHz ³¹P-NMR Spektren bestimmt.

Als Elektrolytflüssigkeit wurde Selectylite^{®} LP 57 eingesetzt, bei dem es sich gemäß WO 2016/149442 A1 um eine 1M Lösung von LiPF₆ in Ethylencarbonat : Ethylmethylcarbonat 30:70 (w/w) handelt.

Als Komponente (A) wurde ein additiviertes Gemisch aus Triethylenglykol monomethylether und Tetraethylenglykol monomethylether wie folgt eingesetzt:

| | |
|---|---|
| Triethylenglykol monomethylether | 86,2 |
| Tetraethylenglykol monomethylether | 10 |
| Octyldiethanolamin | 1,8 |
| Additivgemisch: | |
| Tolyltriazol* | 0,05 |
| Antioxidans** | 0,03 |
| Emulgatoren*** | 0,25 |
| Triethylenglykol monomethylether | 1,67 |
| Entschäumer | 0,001 |
| Summe | 100 |

Die im Addititivgemisch eingesetzten Komponenten haben folgende Wirkung:
* Tolyltriazol als Inhibitor gegen Buntmetallkorrosion
** Antioxidans zur Verhinderung/Verminderung der Oxidation der Alkylenglykolether
***Gemisch aus Fettalkoholethoxylaten

### Beispiel 1 - Spektren der Elektrolytflüssigkeit allein

Das ¹H-NMR zeigte lediglich die Signale des Lösungsmittelgemischs.

Im ³¹P-NMR zeigte sich ein Heptett bei -144 ppm von LiPF₆ sowie schwache Signale bei -19 und -34 ppm, die auf Spuren von Difluorphosphorsäure und Phosphorylfluorid hindeuten.

Im ¹⁹F-NMR Sprektrum zeigte sich ein Doublett bei -74 ppm und schwache Doubletts bei -85 und -90 ppm, die auf Spuren von Difluorphosphorsäure und Phosphorylfluorid hindeuten.

### Beispiel 2 - Mischung der Komponenten (A) und (E)

Die Elektrolytlösung und das oben beschriebene Gemisch der Komponenten (A) wurden im Verhältnis von etwa 50 : 50 (v/v) bei Umgebungstemperatur vermischt, 7 Tage bei dieser Temperatur gelagert und NMR Spektren bei 298 K bzw. 333 K aufgenommen.

Das¹H-NMR zeigte zusätzlich zu den Signalen des Lösungsmittelgemischs aus Beispiel 1 die Signale der Komponenten (A).

Im ³¹P-NMR zeigten sich gegenüber dem Spektrum aus Beispiel 1 keine weiteren Signale. Die in Beispiel 1 sichtbaren schwachen Signale bei -19 und -34 ppm waren nicht mehr detektierbar, vermutlich durch Verdünnung mit der Komponente (A).

Im ¹⁹F-NMR Spektrum zeigten sich gegenüber dem Spektrum aus Beispiel 1 keine weiteren Signale. Die in Beispiel 1 sichtbaren schwachen Signale bei -85 und -90 ppm waren nicht mehr detektierbar, vermutlich durch Verdünnung mit der Komponente (A).

Da in den NMR Spektren keine Verstärkung der Signale von Difluorphosphorsäure und Phosphorylfluorid oder das Auftauchen neuer Signale, die auf Phosphorsäureester hindeuten, beobachtet wurde ist ersichtlich, daß bei Umgebungstemperatur über einen Zeitraum von 7 Tagen und NMR-Messung bei 298 K bzw. 333 K keine Reaktion zwischen der Komponente (A) und LiPF₆ stattgefunden hat.

Das Verschwinden der zuvor in Beispiel 1 beobachteten Signale von Difluorphosphorsäure und Phosphorylfluorid nach Vermischen mit Komponente (A) in Beispiel 2 ist auf den Verdünnungseffekt zurückzuführen.

### Beispiele 3 bis 7 - Mischung der Komponenten (A) und (E) mit weiteren üblichen Bestandteilen von Kühlmitteln

Die Elektrolytlösung und das oben beschriebene Gemisch der Komponenten (A) wurden im Volumenverhältnis wie in der Tabelle angegeben bei Umgebungstemperatur (etwa 20 °C) vermischt, 7 Tage bei dieser Temperatur gelagert und ³¹P- und ¹⁹F-NMR Spektren bei 298 K bzw. 333 K aufgenommen.

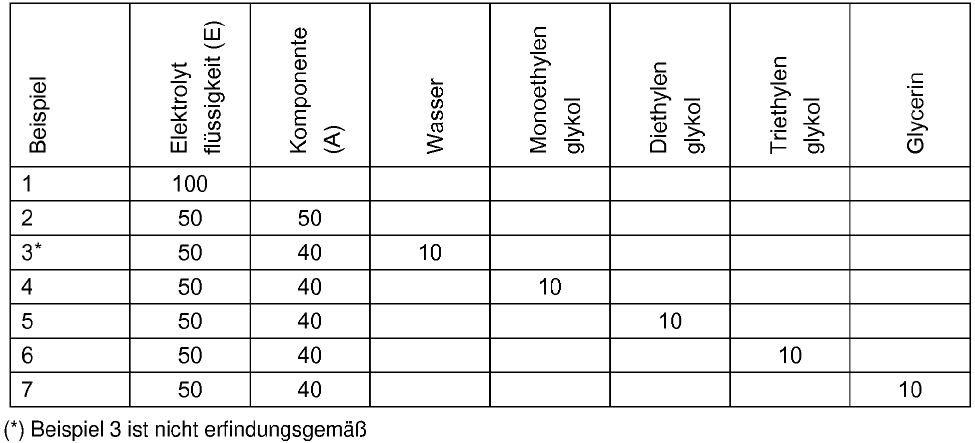

Die Beobachtungen in den Beispielen 3 bis 7 entsprachen denen des Beispiels 2, in den NMR Spektren wurde keine Verstärkung der Signale von Difluorphosphorsäure und Phosphorylfluorid oder das Auftauchen neuer Signale, die auf Phosphorsäureester hindeuten, beobachtet. Somit ist ersichtlich, daß bei Umgebungstemperatur über einen Zeitraum von 7 Tagen und NMR-Messung bei 298 K bzw. 333 K keine Reaktion zwischen LiPF₆ und der Komponente (A) sowie den zusätzlich zugegebenen Bestandteilen stattgefunden hat.

## Patentansprüche

1. Verwendung von Wärmeträgerflüssigkeiten, enthaltend
(A) mindestens ein Alkylenglykolderivat der Formel (I) 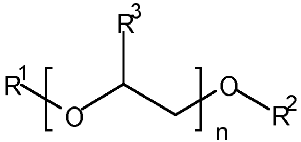 worin
R¹ Wasserstoff oder C₁- bis C₄-Alkyl, bevorzugt Wasserstoff, Methyl oder Ethyl, besonders bevorzugt Wasserstoff oder Methyl und ganz besonders bevorzugt Wasserstoff,
R² C₁- bis C₄-Alkyl, bevorzugt Methyl, Ethyl oder n-Butyl, besonders bevorzugt Methyl oder n-Butyl und ganz besonders bevorzugt Methyl
R³ Wasserstoff oder Methyl, bevorzugt Wasserstoff und
n im arithmetischen Mittel eine Zahl von 3,0 bis 4,0
bedeuten,
und
(B) mindestens einen Korrosionsinhibitor, ausgewählt aus der Gruppe bestehend aus
(Ba) ortho-Kieselsäureestern und/oder Alkoxyalkylsilanen
(Bb) Azolderivaten
(Bc) Verbindungen der allgemeinen Formel (II) 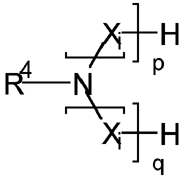 worin
R⁴ einen organischen Rest mit 6 bis 10 Kohlenstoffatomen, insbesondere einen geradkettigen oder verzweigten, bevorzugt geradkettigen Alkyl- oder Alkenylrest mit 6 bis 10 Kohlenstoffatomen, bevorzugt 7 bis 9 und besonders bevorzugt 8 Kohlenstoffatomen,
p und q unabhängig voneinander eine positive ganze Zahl von 1 bis 30, bevorzugt 1 bis 20, besonders bevorzugt 1 bis 10, ganz besonders bevorzugt 1 bis 5 und insbesondere 1 bis 3, speziell 1 oder 2 und
jedes Xᵢ für i = 1 bis p und 1 bis q unabhängig voneinander ausgewählt aus der Gruppe bestehend aus -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CH(C₂H₅)-O-, -CH(C₂H₅)-CH₂-O-, -CH(CH₃)-CH(CH₃)-O-, -CH₂-CH₂-CH₂-O- und -CH₂-CH₂-CH₂-CH₂-O-, bevorzugt ausgewählt aus der Gruppe bestehend aus -CH₂-CH₂-O-, -CH₂-CH(CH₃)-O- und -CH(CH₃)-CH₂-O-, besonders bevorzugt handelt es sich um -CH₂-CH₂-O-,
bedeuten,
zur Kühlung von Lithiumionen-Akkumulatoren, die als Elektrolyten (E) mindestens eine Verbindung ausgewählt aus der Gruppe bestehend aus Lithiumhexafluorophosphat (LiPF₆), Lithiumtetrafluorborat (LiBF₄), Lithiumperchlorat (LiClO₄), Lithiumphosphat (Li₃PO₄) und Lithiumbis(oxalato)borat (LiBOB) enthalten,
mit der Maßgabe, daß die Zusammensetzung
- weniger als 1 Gew% Wasser enthält, bevorzugt weniger als 0,75, besonders bevorzugt weniger als 0,5, ganz besonders bevorzugt weniger als 0,4, insbesondere weniger als 0,3 und speziell weniger als 0,2 Gew%.

2. Verwendung gemäß Anspruch 1, **dadurch gekennzeichnet, daß** es sich bei dem Elektrolyten um LiPF₆ handelt.

3. Verwendung gemäß Anspruch 1 oder 2, **dadurch gekennzeichnet, daß** es sich bei dem Lithiumionen-Akkumulator um einen Lithium-Kobaltdioxid-Akkumulator, Lithiumtitanat-Akkumulator, Lithium-Mangan-Akkumulator, Lithium-Nickel-Kobalt-Aluminium-Akkumulator oder Lithium-Eisenphosphat-Akkumulator handelt.

4. Verwendung gemäß einem der vorstehenden Ansprüche, **dadurch gekennzeichnet, daß** der Elektrolyt in einem aprotischen organischen Lösungsmittel (Eb) gelöst ist.

5. Verwendung gemäß Anspruch 4, **dadurch gekennzeichnet, daß** es sich bei dem aprotischen organischen Lösungsmittel (Eb) um ein offenkettiges oder cyclisches Carbonat handelt.

6. Verwendung gemäß Anspruch 4, **dadurch gekennzeichnet, daß** es sich bei dem aprotischen organischen Lösungsmittel (Eb) um eine Verbindung der Formel (VII) 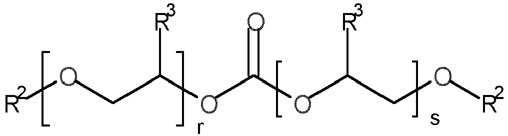
handelt, worin
R² und R³ die oben bei Komponente (A) beschriebene Bedeutung haben und
r und s im arithmetischen Mittel Zahlen von 3,0 bis 4,0
bedeuten,
wobei unabhängig voneinander R² und R³ für jedes r und s gleich oder verschieden sein können, bevorzugt gleich sind.

7. Verwendung gemäß einem der vorstehenden Ansprüche, **dadurch gekennzeichnet, daß** das Strukturelement R³-N< abgeleitet ist von Aminen, ausgewählt ist aus der Gruppe bestehend aus n-Hexylamin, 2-Methylpentylamin, n-Heptylamin, 2-Heptylamin, iso-Heptylamin, 1-Methylhexylamin, n-Octylamin, 2-Ethylhexylamin, 2-Aminooctan, 6-Methyl-2-heptylamin, n-Nonylamin, iso-Nonylamin, n-Decylamin und 2-Propylheptylamin oder deren Gemische.

8. Verwendung gemäß einem der vorstehenden Ansprüche, **dadurch gekennzeichnet, daß** das Azolderivat ausgewählt ist aus der Gruppe bestehend aus Benzimidazol, Benzotriazol, Tolutriazol und/oder hydriertem Tolutriazol.

9. Verwendung gemäß einem der vorstehenden Ansprüche, **dadurch gekennzeichnet, daß** die Wärmeträgerflüssigkeit
95 bis 99,9 Gew% Komponente (A) und
0,1 bis 5 Gew% Komponente (B)
enthält.

10. Verwendung gemäß einem der vorstehenden Ansprüche, **dadurch gekennzeichnet, daß** das Verhältnis der Alkylenglykolderivate der Formel (I) mit n = 3 zu denen mit n = 4 von 100 : 0 bis 40 : 60 beträgt.

11. Verwendung gemäß einem der vorstehenden Ansprüche, in der die Wärmeträgerflüssigkeit aus Komponente (A), Komponente (B), optional mindestens einem weiteren Korrosionsinhibitor (C), der ein anderer als die Komponente (B) ist, sowie optional mindestens eine weitere Verbindung ausgewählt aus der Gruppe bestehend aus Farbstoffen, Entschäumern und Antioxidantien besteht.

## Claims

1. The use of heat-transfer liquids comprising
(A) at least one alkylene glycol derivative of formula (I) 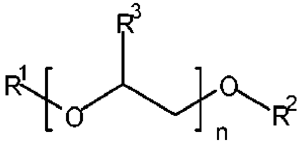 where
R¹ is hydrogen or C₁- to C₄-alkyl, preferably hydrogen, methyl or ethyl, particularly preferably hydrogen or methyl and very particularly preferably hydrogen,
R² is C₁- to C₄-alkyl, preferably methyl, ethyl or n-butyl, particularly preferably methyl or n-butyl and very particularly preferably methyl,
R³ is hydrogen or methyl, preferably hydrogen, and
n is on arithmetic average a number from 3.0 to 4.0 and
(B) at least one corrosion inhibitor selected from the group consisting of
(Ba) orthosilicate esters and/or alkoxyalkylsilanes
(Bb) azole derivatives
(Bc) compounds of general formula (II) 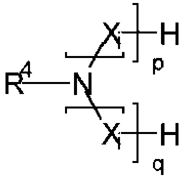 where
R⁴ is an organic radical having 6 to 10 carbon atoms, in particular a straight-chain or branched, preferably straight-chain, alkyl or alkenyl radical having 6 to 10 carbon atoms, preferably 7 to 9 and particularly preferably 8 carbon atoms,
p and q are independently of one another a positive integer from 1 to 30, preferably 1 to 20, particularly preferably 1 to 10, very particularly preferably 1 to 5 and in particular 1 to 3, especially 1 or 2, and
each Xᵢ for i = 1 to p and 1 to q are independently of one another selected from the group consisting of -CH₂-CH₂-O-, -CH₂-CH (CH₃) -O-, -CH (CH₃) -CH₂-O-, -CH₂-C (CH₃)₂-O-, -C (CH₃)₂-CH₂-O-, -CH₂-CH (C₂H₅) -O-, -CH (C₂H₅) -CH₂-O-, - CH (CH₃) -CH (CH₃) -O-, -CH₂-CH₂-CH₂-O- and -CH₂-CH₂-CH₂-CH₂-O-, preferably selected from the group consisting of -CH₂-CH₂-O-, -CH₂-CH (CH₃) -O- and -CH(CH₃)-CH₂-O-, particularly preferably are -CH₂-CH₂-O-,
for cooling lithium-ion rechargeable batteries comprising as electrolyte (E) at least one compound selected from the group consisting of lithium hexafluorophosphate (LiPF₆), lithium tetrafluoroborate (LiBF₄), lithium perchlorate (LiCl04), lithium phosphate (Li₃PO₄) and lithium bis(oxalato)borate (LiBOB), with the proviso that the composition
- comprises less than 1 wt% of water, preferably less than 0.75, particularly preferably less than 0.5, very particularly preferably less than 0.4, in particular less than 0.3 and especially less than 0.2 wt%.

2. The use according to claim 1, wherein the electrolyte is LiPF₆.

3. The use according to claim 1 or 2, wherein the lithium-ion rechargeable battery is a lithium cobalt dioxide rechargeable battery, lithium titanate rechargeable battery, lithium manganese rechargeable battery, lithium nickel cobalt aluminum rechargeable battery or lithium iron phosphate rechargeable battery.

4. The use according to any of the preceding claims, wherein the electrolyte is dissolved in an aprotic organic solvent (Eb).

5. The use according to claim 4, wherein the aprotic organic solvent (Eb) is an open-chain or cyclic carbonate.

6. The use according to claim 4, wherein the aprotic organic solvent (Eb) is a compound of formula (VII) 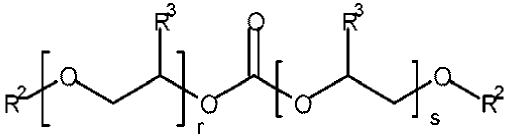 where
R² and R³ are as defined above for component (A) and
r and s are on arithmetic average numbers from 3.0 to 4.0,
wherein R² and R³ may independently of one another for each r and s be identical or different, preferably are identical.

7. The use according to any of the preceding claims, wherein the structural element R³-N< is derived from amines selected from the group consisting of n-hexylamine, 2-methylpentylamine, n-heptylamine, 2-heptylamine, iso-heptylamine, 1-methylhexylamine, n-octylamine, 2-ethylhexylamine, 2-aminooctane, 6-methyl-2-heptylamine, n-nonylamine, iso-nonylamine, n-decylamine and 2-propylheptylamine or mixtures thereof.

8. The use according to any of the preceding claims, wherein the azole derivative is selected from the group consisting of benzimidazole, benzotriazole, tolyltriazole and/or hydrogenated tolyltriazole.

9. The use according to any of the preceding claims, wherein the heat-transfer liquid comprises
95 to 99.9 wt% of component (A) and
0.1 to 5 wt% of component (B).

10. The use according to any of the preceding claims, wherein the ratio of the alkylene glycol derivatives of formula (I) where n = 3 to those where n = 4 is from 100 : 0 to 40 : 60.

11. The use according to any of the preceding claims, in which the heat-transfer liquid consists of component (A), component (B), optionally at least one further corrosion inhibitor (C) distinct from component (B) and optionally at least one further compound selected from the group consisting of dyes, defoamers and antioxidants.

## Revendications

1. Utilisation de liquides caloporteurs, contenant
(A) au moins un dérivé d'alkylèneglycol de formule (I) 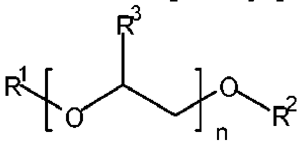 dans laquelle
R¹ signifie hydrogène ou C₁-C₄-alkyle, de préférence hydrogène, méthyle ou éthyle, de manière particulièrement préférée hydrogène ou méthyle et de manière tout particulièrement préférée hydrogène,
R² signifie C₁-C₄-alkyle, de préférence méthyle, éthyle ou n-butyle, de manière particulièrement préférée méthyle ou n-butyle et de manière tout particulièrement préférée méthyle,
R³ signifie hydrogène ou méthyle, de préférence hydrogène et
n signifie, en moyenne arithmétique, un nombre de 3,0 à 4, 0,
et
(B) au moins un inhibiteur de corrosion, choisi dans le groupe constitué par
(Ba) les esters de l'acide ortho-silicique et/ou les alcoxyalkylsilanes,
(Bb) les dérivés d'azole,
(Bc) les composés de formule générale (II) 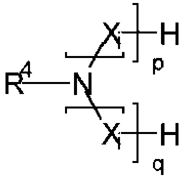 dans laquelle
R⁴ signifie un radical organique comprenant 6 à 10 atomes de carbone, en particulier un radical alkyle ou alcényle linéaire ou ramifié, de préférence linéaire, comprenant 6 à 10 atomes de carbone, de préférence 7 à 9 atomes de carbone et de manière particulièrement préférée 8 atomes de carbone,
p et q signifient, indépendamment l'un de l'autre, un nombre entier positif de 1 à 30, de préférence de 1 à 20, de manière particulièrement préférée de 1 à 10, de manière tout particulièrement préférée de 1 à 5 et en particulier de 1 à 3, spécialement 1 ou 2 et
chaque Xᵢ pour i = 1 à p et 1 à q, indépendamment les uns des autres, est choisi dans le groupe constitué par -CH₂-CH₂-O-, -CH₂-CH (CH₃) -O-, -CH (CH₃) -CH₂-O-, -CH₂-C (CH₃)₂-O-, -C (CH₃)₂-CH₂-O-, -CH₂-CH+(C₂H₅) -O-, -CH (C₂H₅) -CH₂-O-, - CH (CH₃) -CH (CH₃) -O-, -CH₂-CH₂-CH₂-O- et -CH₂-CH₂-CH₂-CH₂-O-, de préférence choisi dans le groupe constitué par -CH₂-CH₂-O-, -CH₂-CH(CH₃)-O- et -CH(CH₃)-CH₂-O-, de manière particulièrement préférée, il s'agit de -CH₂-CH₂-O-,
pour le refroidissement d'accumulateurs à lithium-ion, qui contiennent, comme électrolytes (E), au moins un composé choisi dans le groupe constitué par l'hexafluorophosphate de lithium (LiPF₆), le tétrafluoroborate de lithium (LiBF₄), le perchlorate de lithium (LiClO₄), le phosphate de lithium (Li₃PO₄) et le bis(oxalato)borate de lithium (LiBOB), sous réserve que la composition
- contienne moins de 1% en poids d'eau, de préférence moins de 0,75, de manière particulièrement préférée moins de 0,5, de manière tout particulièrement préférée moins de 0,4, en particulier moins de 0,3 et spécialement moins de 0,2% en poids.

2. Utilisation selon la revendication 1, **caractérisée en ce qu'**il s'agit, pour l'électrolyte, de LiPF₆.

3. Utilisation selon la revendication 1 ou 2, **caractérisée en ce qu'**il s'agit, pour l'accumulateur à lithium-ion, d'un accumulateur à lithium-dioxyde de cobalt, d'un accumulateur à titanate de lithium, d'un accumulateur à lithium-manganèse, d'un accumulateur à lithium-nickel-cobalt ou d'un accumulateur à lithium-phosphate de fer.

4. Utilisation selon l'une des revendications précédentes, **caractérisée en ce que** l'électrolyte est dissous dans un solvant organique aprotique (Eb).

5. Utilisation selon la revendication 4, **caractérisée en ce qu'**il s'agit, pour le solvant organique aprotique (Eb), d'un carbonate à chaîne ouverte ou cyclique.

6. Utilisation selon la revendication 4, **caractérisée en ce qu'**il s'agit, pour le solvant organique aprotique (Eb), d'un composé de formule (VII) 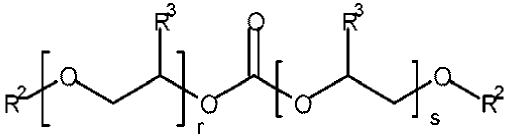 dans laquelle
R² et R³ présentent la signification décrite ci-dessus pour le composant (A) et
r et s signifient, en moyenne arithmétique, des nombres de 3,0 à 4,0,
R² et R³, indépendamment l'un de l'autre, pour chaque r et s, pouvant être identiques ou différents et étant de préférence identiques.

7. Utilisation selon l'une des revendications précédentes, **caractérisée en ce que** l'élément structural R³-N< est dérivé d'amines, et choisi dans le groupe constitué par la n-hexylamine, la 2-méthylpentylamine, la n-heptylamine, la 2-heptylamine, l'iso-heptylamine, la 1-méthylhexylamine, la n-octylamine, la 2-éthylhexylamine, le 2-aminooctane, la 6-méthyl-2-heptylamine, la n-nonylamine, l'iso-nonylamine, la n-décylamine et la 2-propylheptylamine ou leurs mélanges.

8. Utilisation selon l'une des revendications précédentes, **caractérisée en ce que** le dérivé d'azole est choisi dans le groupe constitué par le benzimidazole, le benzotriazole, le tolutriazole et/ou le tolutriazole hydrogéné.

9. Utilisation selon l'une des revendications précédentes, **caractérisée en ce que** le liquide caloporteur contient
95 à 99,9% en poids de composant (A) et
0,1 à 5% en poids de composant (B).

10. Utilisation selon l'une des revendications précédentes, **caractérisée en ce que** le rapport des dérivés d'alkylèneglycol de formule (I) présentant n = 3 à ceux présentant n = 4 est de 100 : 0 à 40 : 60.

11. Utilisation selon l'une des revendications précédentes, dans laquelle le liquide caloporteur est constitué par le composant (A), le composant (B), éventuellement au moins un autre inhibiteur de corrosion (C), qui est différent du composant (B), ainsi qu'éventuellement au moins un autre composé choisi dans le groupe constitué par les colorants, les antimousses et les antioxydants.
